# EUROPÄISCHE PATENTSCHRIFT

(11) **EP 1 724 150 B1**
(45) Veröffentlichungstag und Bekanntmachung des Hinweises auf die Patenterteilung: **17.12.2008**
(21) Anmeldenummer: 06010015.3
(22) Anmeldetag: 16.05.2006
(51) Int. Cl.: B60N 2/42, B60N 2/427, B62D 33/06, B62D 33/067

(54) **Sicherheitssystem für Kraftfahrzeuge und Verfahren zum Schutz von Insassen**
Safety system for automotive vehicle and process for the protection of the occupants
Système de sécurité pour véhicule automobile et procédé pour la protection des occupants

(30) Priorität: 19.05.2005 DE 102005022983
(43) Veröffentlichungstag der Anmeldung: 22.11.2006
(73) Patentinhaber: MAN Nutzfahrzeuge Aktiengesellschaft, 80976 München (DE)
(72) Erfinder: Kneifel, Eberhard, 89250 Senden (DE); Rohrmüller, Hans, 82216 Gernlinden (DE); Mederle, Günther, 85051 Ingolstadt (DE)

(56) Entgegenhaltungen:
- EP-A- 1 106 480
- DE-A1- 1 655 597
- DE-A1- 1 680 095
- DE-A1- 2 809 664
- FR-A- 1 439 918

## Beschreibung

Die vorliegende Erfindung betrifft ein Sicherheitssystem für Kraftfahrzeuge, insbesondere für Nutzfahrzeuge in Frontlenkerbauweise gemäß Oberbegriff des Patentanspruchs 1. Die Erfindung betrifft weiterhin ein Verfahren zum Schutz von Insassen eines Fahrzeuges gemäß Oberbegriff des Patentanspruchs 9.

Insassenschutz- und/oder Rückhaltesysteme in Kraftfahrzeugen umfassen typischerweise Sicherheitsgurte für die Passagiere, wodurch diese bei einem Aufprall im Sitz gehalten und vor Verletzungen aufgrund einer unkontrollierten Relativbewegung zum Fahrzeug geschützt werden. Diese bereits seit vielen Jahren im Fahrzeugbau eingeführten Rückhaltesysteme werden in jüngerer Zeit oftmals ergänzt durch pyrotechnisch gezündete Rückhaltesysteme wie aufblasbare Luftsäcke, sog. Airbags, insbesondere für die Frontpassagiere und sog. Gurtstraffer für die Front- und/oder Fondpassagiere.

Bereits frühzeitig wurden die ungünstigen Wirkungen einer starren Lenksäule für den sich bei einem Frontaufprall nach vorne verlagernden Fahrer erkannt. Aus diesem Grund haben sich Sicherheitslenksäulen etabliert, bei denen sich das Lenkrad nicht mehr in Richtung zum Fahrer verlagert. Die Lenksäulen wurden teleskopartige zusammenschiebbar ausgebildet oder mit einem Knickgelenk o. dgl. versehen.

Neben den vorgenannten Problemen besteht insbesondere bei Nutzfahrzeugen in sog. Frontlenkerbauweise ein konstruktionsbedingter Nachteil darin, dass diese Frontlenkerfahrerhäuser trotz einer crashoptimierten Fahrerhausstruktur im Falle einer Frontkollision bauartbedingt einen relativ geringen Verformungsweg zur Energieabsorption aufweisen. Für den Fahrer und die Passagiere besteht somit bereits bei relativ geringen Karosserieverformungen eine erhebliche Gefahr, eingeklemmt bzw. verletzt zu werden. Aus diesem Grund sind vor allem im Nutzfahrzeugbau zahlreiche Sicherheitssysteme bekannt geworden, die bei einem Aufprall für eine gezielte Verlagerung bzw. Verschwenkung der Lenksäule und des Lenkrades sorgen, um für den Fahrer den Überlebensraum zu vergrößern. Derartige Vorrichtungen sind bspw. aus der DE 16 55 597 A1, aus der DE 26 36 266 A1 sowie aus der US 39 45 662 A bekannt.

Ein mechanisch aktiviertes Sicherheitssystem, das die Aufprallenergie eines Fahrzeuges für eine Insassenschutzvorrichtung nutzt, ist weiterhin aus der DE 33 37 232 A1 bekannt. Hierbei ist ein im Bug des Fahrzeuges angeordnetes Aggregat, insbesondere ein Motorblock, über ein Zugmittel derart mit einem Lenkrad verbunden, dass bei einem Frontaufprall das Lenkrad an das Armaturenbrett des Fahrzeugs und damit aus der unmittelbaren Nähe des Fahrers gezogen wird.

Ein Sicherheitssystem für ein Nutzfahrzeug in Frontlenkerbauweise ist schließlich aus der DE 28 09 664 A1 bekannt. Bei diesem System sind eine Lenksäule und ein Lenkrad in Abhängigkeit von einer Fahrzeugfrontverformung in eine Schutzlage bringbar. Zusätzlich kann vorgesehen sein, dass ein Fahrersitz entsprechend der Lenkung zumindest über Teile deren Verstellweges entriegelbar und längsverschiebbar ist. Die Auslösung bzw. Mitnahme kann dabei über ein Zugseil eingeleitet und bewirkt werden.

Ferner beschreibt die EP 1 106 480 A2 die Karosserie eines Personenkraftwagens, in der der Fahrersitz bei einem Frontalaufprall rückverlagert werden kann. Die Rückverlagerung wird mit Hilfe eines Zugseils erreicht, das bei einem Frontalaufprall im vorderen Bereich V-förmig nach hinten verformt wird. Auf diese Weise wird die Länge des Zugseils zwischen dem vorderen Bereich und einer hinter dem Sitz angeordneten Umlenkrolle verkürzt und so der Fahrersitz nach hinten verlagert.

Ein vorrangiges Ziel der Erfindung besteht darin, ein möglichst einfach aufgebautes und effektives Sicherheitssystem für Nutzfahrzeuge zur Verfügung zu stellen, das bei einem Frontaufprall einen verbesserten Schutz zumindest des Fahrers vor Verletzungen ermöglicht.

Dieses Ziel der Erfindung wird mit dem Gegenstand der unabhängigen Patentansprüche erreicht. Merkmale vorteilhafter Weiterbildungen der Erfindungen ergeben sich aus den abhängigen Ansprüchen.

Bei einem erfindungsgemäßen Sicherheitssystem für Nutzfahrzeuge in Frontlenkerbauweise, die einen Fahrzeugrahmen und eine mit diesem starr oder schwenkbar verbundene Fahrerkabine aufweisen, die im Fall einer Frontalkollision gegenüber dem Fahrgestellrahmen kontrolliert nach hinten verschiebbar ist und über einen darin angeordneten, in Längsrichtung des Fahrzeugs verschiebbaren Fahrersitz verfügt, wobei der Fahrersitz über ein umgelenktes Zugmittel mit einem starren Fahrzeugteil gekoppelt ist, ist vorgesehen, dass das Zugmittel mit einem Ende starr am Fahrzeugrahmen verankert und über eine hinter dem Fahrersitz angeordnete Umlenkeinrichtung mit seinem anderen Ende rückseitig am Fahrersitz verankert ist.

Die erfindungsgemäße Koppelung des Fahrersitzes mit einem starren Fahrzeugteil, insbesondere mit einem vorderen Bereich des Fahrzeugrahmens kann bei einem Frontaufprall dafür sorgen, dass gleichzeitig mit einer Verschiebung der Fahrerkabine nach hinten der Fahrersitz in Richtung zur Kabinenrückwand verschoben wird. Vorzugsweise erfolgt gleichzeitig bzw. zu Beginn dieser Längsverschiebung des Fahrersitzes nach hinten dessen Entriegelung, da es andernfalls notwendig wäre, den Sitz mit Gewalt aus seiner Raststellung zu bringen, wofür ein zusätzlicher Kraftaufwand notwendig wäre.

Bei einer typischen Auslegung einer Fahrerhauslagerung wird im Falle einer Frontalkollision das gesamte Fahrerhaus gegenüber dem Chassisrahmen kontrolliert nach hinten verschoben, ohne dabei abzureißen. Bei einer in der Praxis relativ häufig vorkommenden Auffahrkollision zweier Nutzfahrzeuge trifft das Fahrerhaus des auffahrenden Fahrzeugs in der Regel auf den Aufbau des voraus fahrenden Fahrzeugs, ohne dass sich die Fahrzeugrahmen berühren. Abhängig von der Differenzgeschwindigkeit kommt es dabei zu einer Intrusion des Fahrzeughecks des vorderen Fahrzeugs in die Fahrerkabine, wobei diese gleichzeitig verformt und gegenüber dem tragenden Rahmen nach hinten verschoben wird. Gleichzeitig bewirkt die plötzlich auftretende Fahrzeugverzögerung eine Vorwärtsverlagerung des Fahrers und/oder der Passagiere sowie des bzw. der Sitze, wobei vorausgesetzt wird, dass die Passagiere ihre Rückhaltesysteme aktiviert haben, indem sie angegurtet sind. Durch diese Vorwärtsverlagerung wird der Freiraum zwischen Instrumententafel bzw. Lenkrad und Sitz eingeschränkt, was die Ursache für das in der Praxis hauptsächlich auftretende Verletzungsrisiko im Bein- und Unterschenkelbereich der Passagiere ist.

Gemäß der vorliegenden Erfindung ist der Fahrersitz in gleichsinniger Richtung zu einer Längsverlagerung der Fahrerkabine gegenüber dem Fahrzeugrahmen bewegbar. Wenn somit die Fahrerkabine gegenüber dem tragenden Chassisrahmen nach hinten verschoben wird, sorgt diese Relativbewegung gleichzeitig für eine Rückverlagerung des Fahrersitzes in Richtung zur Kabinenrückwand, wodurch der Freiraum für den Fahrer vergrößert und das Verletzungsrisiko für ihn, insbesondere für seine Beine und Unterschenkel reduziert wird.

Wenn im vorliegenden Zusammenhang meist von einem Fahrer sowie von einem Fahrersitz die Rede ist, der in Längsrichtung verschiebbar ist, so ist damit generell auch ein Beifahrersitz bzw. die Sitze für Mitfahrer gemeint, die ebenfalls mit dem erfindungsgemäßen Sicherheitssystem gekoppelt sein können, bspw. durch Verbindung des Beifahrersitzes mit einem weiteren Zugmittel, so dass der Fahrersitz und der Beifahrersitz bei einer Verschiebung der Kabine nach hinten eine weitgehend parallele Längsbewegung in Richtung zur Kabinenrückwand erfahren.

Eine bevorzugte Ausführungsform der Erfindung sieht vor, dass die Umlenkeinrichtung eine hinter dem Fahrersitz angeordnete und starr an der Fahrerkabine verankerte Umlenkrolle für das Zugmittel ist. Das Zugmittel kann insbesondere ein Zugseil oder eine Zugkette o. dgl. sein. Wichtig ist, dass das Zugmittel in der Lage ist, weitgehend dehnungsfrei sehr hohe Kräfte zu übertragen, denn das Zugmittel muss der aufprallbedingten Vorwärtsverlagerung des Sitzes mit dem darauf befindlichen Passagier nicht nur entgegen wirken, sondern darüber hinaus eine Verlagerung des Sitzes in die entgegengesetzte Richtung bewirken. Als Zugseil kommt aus Festigkeitsgründen insbesondere ein Stahlseil oder eine Gliederkette aus Stahl in Frage. Ggf. kann das Zugmittel auch ein Seil oder Riemen aus hochfestem Kunststoff o. dgl. sein.

Vorzugsweise ist ein Rückhaltesystem für den Fahrer derart mit dem Fahrersitz gekoppelt, dass es gemeinsam mit diesem in Längsrichtung verschiebbar ist. Das Rückhaltesystem kann insbesondere ein mit dem Fahrersitz gekoppeltes Gurtsystem umfassen. Da eine Rückverschiebung des Sitzes ohne gleichzeitige Verschiebung des Gurtsystems zu dessen Lockerung führen würde, ist es notwendig, die Halterungen und Umlenkpunkte des Gurtsystems mit dem verschiebbaren Sitz zu koppeln bzw. derart zu aktivieren und straff zu ziehen, dass eine Lockerung der Gurte vermieden werden kann. Ansonsten würden sich die Passagiere vom Sitz lösen können, wodurch die Schutzwirkung des erfindungsgemäßen Sicherheitssystems weitgehend aufgehoben wäre.

Eine erfindungsgemäße Ausführungsform sieht vor, dass eine vordere Umlenkeinrichtung für das Zugmittel am Fahrzeugrahmen und nahe bzw. deckungsgleich mit einer Schwenkachse für die Fahrerkabine angeordnet ist. Insbesondere kann die vordere Umlenkeinrichtung bzw. Umlenkrolle so angeordnet sein, dass sie oberhalb der Kippachse des Fahrerhauses liegt, damit beim Kippen des Fahrerhauses keine unerwünschte Spannung in das Zugmittel bzw. das Zugseil eingeleitet werden kann.

Die Erfindung umfasst in gleicher Weise ein Verfahren zum Insassenschutz, bei dem im Falle einer Frontalkollision der Fahrersitz und/oder der Beifahrersitz mittels eines Zugmittels in Richtung zur Rückwand der Fahrerkabine verschoben wird, um den Überlebensraum für die Passagiere zu vergrößern, der ansonsten aufgrund der Verformung der Kabine im Frontbereich so stark reduziert sein könnte, dass es zu mehr oder weniger starken Verletzungen der Passagiere kommen kann.

Die Erfindung wird nachfolgend anhand bevorzugter Ausführungsbeispiele unter Bezugnahme auf die beiliegenden Zeichnungen näher erläutert. Die hierbei erläuterten Ausführungsformen dienen zur Illustration, stellen jedoch keine Einschränkung des Erfindungsgedankens dar.

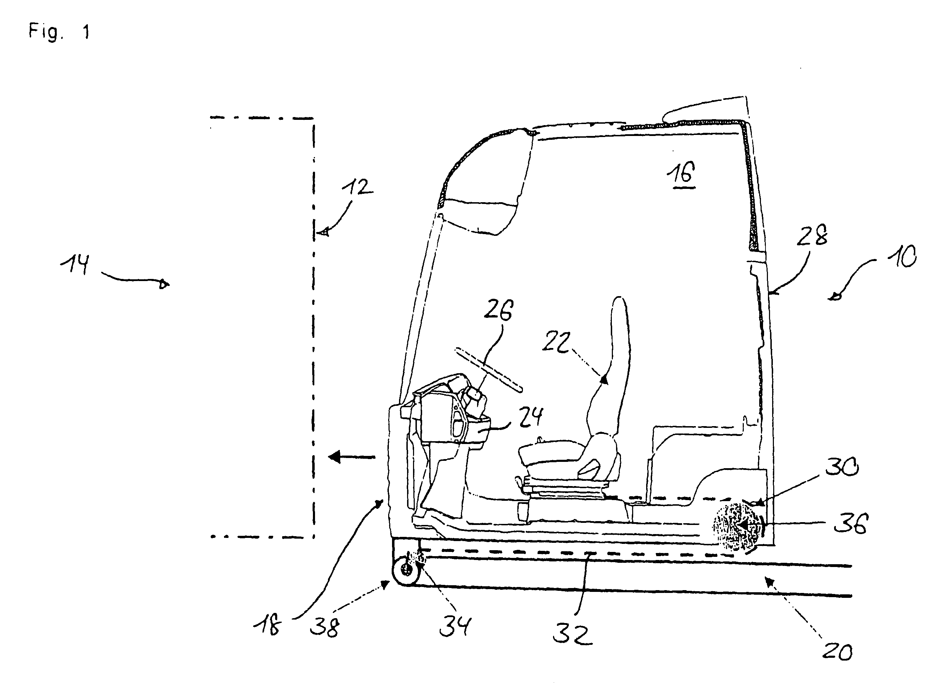

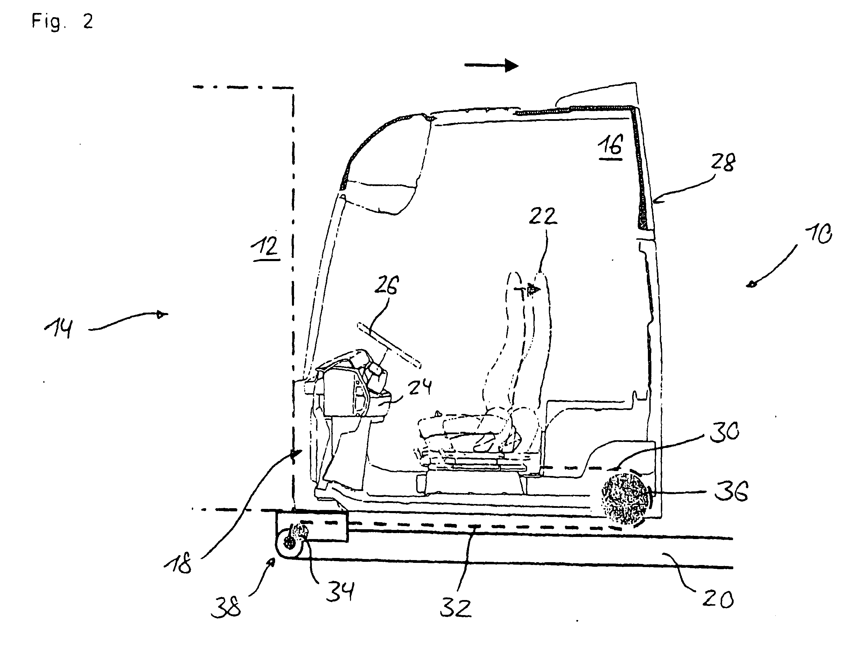

Die Figuren 1 und 2 zeigen in schematischen Darstellungen die Situation einer typischen Auffahrkollision zwischen zwei Nutzfahrzeugen, wobei das hintere, auffahrende Nutzfahrzeug eine Fahrerkabine in Frontlenkerbauweise aufweist.

Die schematische Darstellung der Fig. 1 verdeutlicht ein erstes Nutzfahrzeug 10, das sich in einer typischen Situation einer Auffahrkollision einem Heckaufbau 12 eines zweiten Nutzfahrzeuges 14 nähert. Bei einer solchen Auffahrkollision zweier Nutzfahrzeuge 10 und 14 trifft meist die Fahrerkabine 16 des auffahrenden Fahrzeugs 10 auf den Aufbau 12 des vorausfahrenden Fahrzeugs 14, ohne dass dabei die Fahrgestellrahmen der beiden Fahrzeuge 10 und 14 miteinander in Kontakt kommen. Abhängig von der Differenzgeschwindigkeit der Fahrzeuge kommt es zu einer Intrusion des Heckaufbaus 12 in die Front 18 der Fahrerkabine 16, die sich hierbei gezielt verformt, um einen Teil der Aufprallenergie zu absorbieren. Ein weiterer Teil der Aufprallenergie kann durch eine gezielte Rückverlagerung der Fahrerkabine 16 gegenüber dem Fahrgestellrahmen 20 des auffahrenden Nutzfahrzeugs 10 absorbiert werden.

Die erhebliche Verzögerung des ersten Nutzfahrzeuges 10 während des Aufpralls sorgt für eine Vorwärtsverlagerung des angegurteten Fahrers (nicht dargestellt) sowie ggf. des Fahrersitzes 22. Zusammen mit der Verformung der Front 18 der Fahrerkabine 16 wird somit der Freiraum zwischen Instrumententafel 24 bzw. Lenkrad 26 und Sitz 22 eingeschränkt, was die Ursache für das Hauptverletzungsrisiko im Bein- und Unterschenkelbereich des Fahrers ist.

Um diesen Freiraum zwischen Instrumententafel 24 und Sitz 22 beim Aufprall zu vergrößern, sieht das erfindungsgemäße Sicherungssystem eine Zugverbindung zwischen Fahrgestellrahmen 20 und Sitz 22 vor, die bei einer Rückverlagerung der Fahrerkabine 16 für eine entsprechende Rückverlagerung des Fahrersitzes 22 in Richtung zur Kabinenrückwand 28 sorgt. Die Zugverbindung umfasst ein Zugmittel 30 in Form eines Zugseils 32 aus Stahl oder Kunststoff, einer Zugkette o. dgl., das über zwei Umlenkrollen 34 und 36 für eine umgelenkte Verbindung zwischen Fahrgestellrahmen 20 und Sitz 22 sorgt.

Das Zugseil 32 ist mit einem Ende am Fahrgestellrahmen 20 verankert, dort über die erste Umlenkrolle 34 horizontal unterhalb der Fahrerkabine 16 geführt, ist über die zweite Umlenkrolle 36 um 180° umgelenkt und mit seinem zweiten Ende an der Rückseite des Sitzes 22 verankert.

Wie insbesondere anhand der Fig. 2 verdeutlicht ist, sorgt das Zugmittel 30 bei einer Rückverlagerung der Fahrerkabine 16 für eine parallele Rückverlagerung des Sitzes 22 in Richtung zur Kabinenrückwand 28, so dass der Freiraum zwischen Sitz 22 und Instrumententafel 24 bzw. zwischen Sitz 22 und Lenkrad 26 vergrößert und damit das Verletzungsrisiko für den Fahrer reduziert wird.

Die erste Umlenkrolle 34 ist am Frontbereich des Fahrgestellrahmens 20 gelagert. Die Anordnung ist vorzugsweise so gewählt, dass sie oberhalb einer Kippachse 38 für die Fahrerkabine 16 angeordnet ist, damit beim Kippen der Fahrerkabine 16 keine unerwünschte Spannung auf das Zugmittel 30 bzw. das Zugseil 32 ausgeübt wird. Die zweite Umlenkrolle 36 ist im Bodenbereich der Fahrerkabine 16 gelagert, da sie bei deren Rückverlagerung ebenfalls nach hinten verlagert werden muss, um den Seilabschnitt unterhalb der Fahrerkabine 16 zu verlängern. Hierdurch wird aufgrund der starren Befestigung der Seilenden gleichzeitig der Seilabschnitt zwischen zweiter Umlenkrolle 36 und Sitz 22 verkürzt, wodurch dieser nach hinten gezogen wird. Vorzugsweise erfolgt gleichzeitig mit einer Rückverlagerung des Sitzes 22 dessen Entriegelung, so dass ein Abreißen der Sitzverankerung vermieden werden kann.

Nicht dargestellt, jedoch wichtig für die einwandfreie Schutzwirkung des Systems ist die Koppelung des Gurtsystems mit dem Fahrersitz 22. Bei einer Anlenkung des Gurtsystems an der Seiten- oder Rückwand der Fahrerkabine würde bei einer Rückverlagerung des Sitzes 22 der Gurt gelockert, wodurch die Schutzwirkung für den Fahrer stark reduziert wäre. Vorzugsweise ist der Sitz 22 mit einem Integralgurtsystem ausgestattet, bei dem die Gurtführung am Sitz 22 selbst verankert ist und bei dessen Verschiebung zusammen mit diesem verschoben wird. Darüber hinaus können weitere Sicherheitseinrichtungen vorgesehen sein, welche die Schutzwirkung für den Fahrer erhöhen, bspw. pyrotechnische und/oder seilzugbetätigte Gurtstraffer, ein Lenkrad-Airbag, Seiten-Airbags o. dgl.

Wenn im vorliegenden Zusammenhang meist von einem Fahrer sowie von einem Fahrersitz 22 die Rede ist, der in Längsrichtung verschiebbar ist, so soll an dieser Stelle nochmals betont sein, dass damit generell auch ein Beifahrersitz bzw. die Sitze für Mitfahrer gemeint sind, die ebenfalls mit dem erfindungsgemäßen Sicherheitssystem gekoppelt sein können, bspw. durch Verbindung des Beifahrersitzes (nicht dargestellt) mit einem weiteren Zugmittel, das ebenfalls über entsprechende Umlenkeinrichtungen mit dem Fahrgestellrahmen 20 gekoppelt ist, so dass der Fahrersitz 22 und der Beifahrersitz bei einer Verschiebung der Kabine 16 nach hinten eine weitgehend parallele Längsbewegung in Richtung zur Kabinenrückwand 28 erfahren.

## Patentansprüche

1. Nutzfahrzeug in Frontlenkerbauweise, das einen Fahrgestellrahmen (20) und eine mit diesem starr oder schwenkbar verbundene Fahrerkabine (16) aufweist, und über einen darin angeordneten, in Längsrichtung des Fahrzeugs verschiebbaren Fahrersitz (22) verfügt, und das über ein Sicherheitssystem verfügt, bei dem der Fahrersitz (22) über ein umgelenktes Zugmittel (30) mit einem starren Fahrzeugteil gekoppelt ist, **dadurch gekennzeichnet, dass** die Fahrerkabine im Fall einer Frontalkollision gegenüber dem Fahrgestellrahmen (20) kontrolliert nach hinten verschiebbar ist und das Zugmittel (30) mit einem Ende starr am Fahrgestellrahmen (20) verankert und über eine hinter dem Fahrersitz (22) angeordnete Umlenkeinrichtung mit seinem anderen Ende rückseitig am Fahrersitz (22) verankert ist.

2. Sicherheitssystem nach Anspruch 1, **dadurch gekennzeichnet, dass** der Fahrersitz (22) in gleichsinniger Richtung zu einer Längsverlagerung der Fahrerkabine (16) gegenüber dem Fahrgestellrahmen (20) bewegbar ist.

3. Sicherheitssystem nach Anspruch 1 oder 2, **dadurch gekennzeichnet, dass** der Fahrersitz (22) bei einer Rückverlagerung der Fahrerkabine (16) gegenüber dem Fahrgestellrahmen (20) in Richtung zu einer Kabinenrückwand (28) bewegbar ist.

4. Sicherheitssystem nach einem der Ansprüche 1 bis 3, **dadurch gekennzeichnet, dass** die Umlenkeinrichtung eine hinter dem Fahrersitz (22) angeordnete und starr an der Fahrerkabine (16) verankerte Umlenkrolle (36) für das Zugmittel (30) ist.

5. Sicherheitssystem nach einem der voranstehenden Ansprüche, **dadurch gekennzeichnet, dass** das Zugmittel (30) ein Zugseil (32) oder eine Zugkette o. dgl. ist.

6. Sicherheitssystem nach einem der voranstehenden Ansprüche, **dadurch gekennzeichnet, dass** ein Rückhaltesystem für den Fahrer derart mit dem Fahrersitz (22) gekoppelt ist, dass es gemeinsam mit diesem in Längsrichtung verschiebbar ist.

7. Sicherheitssystem nach Anspruch 6, **dadurch gekennzeichnet, dass** das Rückhaltesystem ein mit dem Fahrersitz (22) gekoppeltes bzw. an diesem verankertes Gurtsystem umfasst.

8. Sicherheitssystem nach einem der voranstehenden Ansprüche, **dadurch gekennzeichnet, dass** eine vordere Umlenkeinrichtung bzw. eine vordere Umlenkrolle (34) für das Zugmittel (30) am Fahrgestellrahmen (20) und nahe bzw. deckungsgleich mit einer Schwenk- bzw. Kippachse (38) für die Fahrerkabine (16) angeordnet ist.

9. Verfahren zum Insassenschutz eines Nutzfahrzeuges in Frontlenkerbauweise im Kollisionsfall, das einen Fahrgestellrahmen (20) und eine mit diesem starr oder schwenkbar verbundene Fahrerkabine (16) aufweist, und über einen darin angeordneten, in Längsrichtung des Fahrzeugs verschiebbaren Fahrersitz (22) verfügt, wobei der Fahrersitz (22) über ein umgelenktes Zugmittel (30) mit einem starren Fahrzeugteil gekoppelt ist, **dadurch gekennzeichnet, dass** die Fahrerkabine im Fall einer Frontalkollision gegenüber dem Fahrgestellrahmen (20) kontrolliert nach hinten verschiebbar ist und der Fahrersitz (22) über das mit einem Ende starr am Fahrgestellrahmen (20) verankerte und über eine hinter dem Fahrersitz (22) angeordnete Umlenkeinrichtung mit seinem anderen Ende rückseitig am Fahrersitz (22) verankerte Zugmittel (30) bei einer Frontalkollision gleichzeitig mit einer Verschiebung der Fahrerkabine in Richtung zur Rückwand (28) der Fahrerkabine (16) verschoben wird.

10. Verfahren nach Anspruch 9, das mit einem Sicherheitssystem gemäß einem der Ansprüche 1 bis 8 durchführbar ist.

## Claims

1. Forward-control commercial vehicle having a chassis frame (20) and a driver's cab (16) attached rigidly or rotatably thereto and a driver's seat (22) arranged therein and capable of sliding in the vehicle's longitudinal direction, and having a safety system in which the driver's seat (22) is coupled to a rigid portion of the vehicle via a reversed tensioning means (30), **characterised in that** the driver's cab is displaceable backwards relative to the chassis frame (20) in a controlled manner in the event of a frontal collision and the tensioning means (30) is attached rigidly by one end to the chassis frame (20) and is anchored by its other end to the back of the driver's seat (22) via a reversing device arranged behind the driver's seat (22).

2. Safety system according to Claim 1, **characterised in that** the driver's seat (22) is movable relative to the chassis frame (20) in the same direction as a longitudinal displacement of the driver's cab (16).

3. Safety system according to Claim 1 or 2, **characterised in that,** in the presence of a rearward displacement of the driver's cab (16), the driver's seat (22) is movable relative to the chassis frame (20) in the direction of the rear wall (28) of the cab (16).

4. Safety system according to one of the Claims 1 to 3, **characterised in that** the reversing device is a reversing pulley (36) for the tensioning means (30), arranged behind the driver's seat (22) and anchored rigidly to the driver's cab (16).

5. Safety system according to one of the foregoing Claims, **characterised in that** the tensioning means (30) is a tensioning cable (32) or a tensioning chain or the like.

6. Safety system according to one of the foregoing Claims, **characterised in that** a retaining system for the driver is attached to the driver's seat (22) in such a way as to be capable of sliding together with the latter in a longitudinal direction.

7. Safety system according to Claim 6, **characterised in that** the retaining system comprises a seat belt system coupled to the driver's seat (22) and/or anchored to the latter.

8. Safety system according to one of the foregoing Claims, **characterised in that** a front reversing device and/or a front reversing pulley (34) for the tensioning means (30) is arranged on the chassis frame (20) and close to and/or coincident with a swivelling or tilting axis (38) for the driver's cab (16).

9. Method for protecting the occupant(s) of a forward-control commercial vehicle in the event of a collision, having a chassis frame (20) and a driver's cab (16) attached rigidly or rotatably thereto and having a driver's seat (22) arranged therein and capable of sliding in the vehicle's longitudinal direction, whereby the driver's seat (22) is coupled to a rigid portion of the vehicle via a reversed tensioning means (30), **characterised in that,** in the event of a frontal collision, the driver's cab is displaceable backwards relative to the chassis frame (20) in a controlled manner and in the event of a frontal collision the driver's seat (22) is displaced towards the rear wall (28) of the driver's cab (16), simultaneously with a displacement of the driver's cab (16), via the tensioning means (30) whose one end is anchored rigidly to the chassis frame (20) and whose other end is anchored to the back of the driver's seat (22) via a reversing device arranged behind the driver's seat (22).

10. Method according to Claim 9 that can be carried out using a safety system according to one of the Claims 1 to 8.

## Revendications

1. Véhicule industriel à cabine avancée qui est équipé d'un cadre de châssis (20) et d'une cabine chauffeur (16) reliée à celui-ci de manière rigide ou pivotante, déplaçable de manière contrôlée vers l'arrière par rapport au cadre de châssis (20) en cas de collision frontale et équipée d'un siège chauffeur (22) disposé dans celle-ci et déplaçable dans le sens longitudinal du véhicule, et qui est équipé d'un système de sécurité sur lequel le siège chauffeur (22) est accouplé à un élément rigide du véhicule par l'intermédiaire d'un élément de traction avec renvoi (30), **caractérisé en ce que** l'une des extrémités de la cabine chauffeur et de l'élément de traction (30) est ancrée de manière rigide sur le cadre de châssis (20) et l'autre extrémité est ancrée sur la face arrière du siège chauffeur (22) par l'intermédiaire d'un dispositif de renvoi disposé derrière le siège chauffeur (22).

2. Système de sécurité selon la revendication 1, **caractérisé en ce que** le siège chauffeur (22) est déplaçable par rapport au cadre de châssis (20) dans le même sens que le déplacement longitudinal de la cabine chauffeur (16).

3. Système de sécurité selon la revendication 1 ou 2, **caractérisé en ce que** le siège chauffeur (22) est déplaçable par rapport au cadre de châssis (20) en direction de la paroi AR de la cabine (28) en cas de déplacement vers l'arrière de la cabine chauffeur (16).

4. Système de sécurité selon l'une des revendications 1 à 3, **caractérisé en ce que** le dispositif de renvoi est une poulie de renvoi (36) pour l'élément de traction (30) qui est disposée derrière le siège chauffeur (22) et ancrée de manière rigide sur la cabine chauffeur (16).

5. Système de sécurité selon l'une des revendications précitées, **caractérisé en ce que** l'élément de traction (30) est un câble de traction (32) ou une chaîne de traction ou similaire.

6. Système de sécurité selon l'une des revendications précitées, **caractérisé en ce qu'**un système de retenue pour le chauffeur est accouplé au siège chauffeur (22) de telle manière qu'il est déplaçable dans le sens longitudinal conjointement avec celui-ci.

7. Système de sécurité selon la revendication 6, **caractérisé en ce que** le système de retenue comprend un système de ceinture accouplé au siège chauffeur (22) ou ancré sur celui-ci.

8. Système de sécurité selon l'une des revendications précitées, **caractérisé en ce qu'**un dispositif de renvoi avant ou une poulie de renvoi avant (30) pour l'élément de traction (30) est disposé(e) sur le cadre de châssis (20) proche d'un ou de manière coïncidente avec un axe de pivotement ou de basculement (38) pour la cabine chauffeur (16).

9. Procédé pour la protection des occupants d'un véhicule industriel à cabine avancée en cas de collision qui est équipé d'un cadre de châssis (20) et d'une cabine chauffeur (16) reliée à celui-ci de manière rigide ou pivotante, déplaçable de manière contrôlée vers l'arrière par rapport au cadre de châssis (20) en cas de collision frontale et équipée d'un siège chauffeur (22) disposé dans celle-ci et déplaçable dans le sens longitudinal du véhicule, le siège chauffeur (22) étant accouplé à un élément fixe du véhicule par l'intermédiaire d'un élément de traction avec renvoi (30), **caractérisé en ce que** la cabine chauffeur et le siège chauffeur (22) sont déplacés, en cas de collision frontale, simultanément avec le déplacement de la cabine chauffeur en direction de la paroi arrière (28) de la cabine chauffeur (16) par l'intermédiaire de l'élément de traction (30) dont l'une des extrémités est ancrée de manière rigide sur le cadre de châssis (20) et l'autre extrémité est ancrée sur la face arrière du siège chauffeur (22) par l'intermédiaire d'un dispositif de renvoi disposé derrière le siège chauffeur (22).

10. Procédé selon la revendication 9 qui peut être réalisé avec un système de sécurité selon l'une des revendications 1 à 8.
